(19) Europäisches Patentamt
European Patent Office
Office européen des brevets

(11) EP 3 202 868 A1

(12) EUROPEAN PATENT APPLICATION
published in accordance with Art. 153(4) EPC

(43) Date of publication:
09.08.2017 Bulletin 2017/32

(51) Int Cl.:
*C09J 7/02* (2006.01)        *C09J 133/00* (2006.01)

(21) Application number: 15846820.7

(86) International application number:
PCT/JP2015/077307

(22) Date of filing: 28.09.2015

(87) International publication number:
WO 2016/052399 (07.04.2016 Gazette 2016/14)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: 29.09.2014 JP 2014199394

(71) Applicant: Sekisui Chemical Co., Ltd.
Osaka-shi, Osaka 530-0047 (JP)

(72) Inventors:
• **UCHIDA, Noriyuki**
**Inukami-gun**
**Shiga 522-0314 (JP)**
• **IWAI, Yuki**
**Inukami-gun**
**Shiga 522-0314 (JP)**

(74) Representative: **Hart-Davis, Jason et al**
**Cabinet Beau de Loménie**
**158, rue de l'Université**
**75340 Paris Cedex 07 (FR)**

(54) **DOUBLE-SIDED ADHESIVE TAPE**

(57) The present invention aims to provide a double-sided adhesive tape excellent in voltage resistance and used for applications such as bonding and fixing components of portable electronic devices and bonding and fixing automobile components.

The present invention relates to a double-sided adhesive tape, including: a substrate; and acrylic adhesive layers on both sides of the substrate, the substrate including a polyolefin foam, the substrate having a density of 0.5 to 0.85 g/cm$^3$, a thickness of 100 to 200 $\mu$m, and an average cell size in a thickness direction of 80 $\mu$m or less.

**Description**

TECHNICAL FIELD

The present invention relates to a double-sided adhesive tape excellent in voltage resistance and used for applications such as bonding and fixing components of portable electronic devices and bonding and fixing automobile components.

BACKGROUND ART

Portable electronic devices such as cellular phones and personal digital assistants (PDAs) often drop out of the user's hand to the ground. In order to prevent their components from being dislodged or damaged even under impact, fixing of the components or the design of the device body has been studied. Double-sided adhesive tapes used for fixing such a component to the device body are thus required to prevent the component from being dislodged even under impact as well as to protect it from strong impact.

Double-sided adhesive tapes having a polyolefin foam substrate, for example, have been studied as impact-absorbing tapes for fixing a component of a portable electronic device to the device body.

Patent Literatures 1 and 2 each disclose an impact-absorbing tape including a substrate layer and an acrylic adhesive layer laminated on at least one side of the substrate layer, wherein the substrate layer is a crosslinked polyolefin resin foamed sheet having a specific degree of crosslinking and a specific bubble aspect ratio.

Double-sided adhesive tapes are also used for fixing an automobile component to the automobile body. The double-sided adhesive tapes with a polyolefin foam substrate, which has excellent impact-absorbing properties, are used also in such an application.

In recent years, bonding and fixing of such portable electronic device's components or bonding and fixing of automobile components have increasingly involved sticking metal components containing metal or metal plating together using double-sided adhesive tapes. The double-sided adhesive tapes can disadvantageously break down due to external static electricity, thus energizing the metal components to cause defects such as short circuit. Especially, portable electronic devices such as smartphones, which in many cases include touch panel-type display devices, are susceptible to static electricity and suffer from, for example, the defect that the liquid crystal displays fail to illuminate.

CITATION LIST

- Patent Literature

Patent Literature 1: JP 2009-242541 A
Patent Literature 2: JP 2009-258274 A

SUMMARY OF INVENTION

- Technical Problem

The present invention aims to provide a double-sided adhesive tape excellent in voltage resistance and used for applications such as bonding and fixing components of portable electronic devices and bonding and fixing automobile components.

- Solution to Problem

The present invention is directed to a double-sided adhesive tape including a substrate and acrylic adhesive layers on both sides of the substrate, the substrate including a polyolefin foam, the substrate having a density of 0.5 to 0.85 g/cm$^3$, a thickness of 100 to 200 $\mu$m, and an average cell size in the thickness direction of 80 $\mu$m or less.

The present invention will be described in detail below.

The present inventors found out that in a double-sided adhesive tape having acrylic adhesive layers on both sides of a substrate, the use of a polyolefin foam as the substrate and the adjustment of the density, thickness, and average cell size in the thickness direction of the substrate within specific ranges lead to reduction in defects such as the short circuit caused by static electricity when the double-sided adhesive tape is stuck to metal components, in other words, lead to excellent voltage resistance. They thus completed the present invention.

The double-sided adhesive tape of the present invention includes a substrate and acrylic adhesive layers on both sides of the substrate.

The substrate includes a polyolefin foam. The polyolefin foam may be any foam containing a polyolefin resin. Examples of such a foam include polyethylene foams, polypropylene foams, and ethylene-propylene foams.

The polyolefin resin is not limited. In order to adjust the density, thickness, and average cell size in the thickness direction of the substrate within the desired ranges, the polyolefin resin is preferably one obtained using, as a polymerization catalyst, a metallocene compound containing a tetravalent transition metal. In particular, a polyethylene resin obtained using a metallocene compound is more preferred.

Examples of the metallocene compound include Kaminsky catalysts.

Examples of the polyethylene resin obtained using the metallocene compound include a polyethylene resin obtained by copolymerizing ethylene with, if necessary, other $\alpha$-olefin(s) using the metallocene compound. Examples of such other $\alpha$-olefins include propene, 1-butene, 1-pentene, and 1-hexene.

The polyethylene resin obtained using the metallocene compound may be used in combination with other olefin resin(s). Examples of such other olefin resins include polyethylene, polypropylene, and ethylene-propylene copolymer.

In this case, the amount of the polyethylene resin obtained using the metallocene compound in the polyolefin foam is preferably 40% by weight or more. When the amount of the polyethylene resin obtained using the metallocene compound is 40% by weight or more, the polyolefin foam can have high compressive strength even when the polyolefin foam is thin.

The polyolefin foam is preferably crosslinked. Crosslinking of the polyolefin foam facilitates the adjustment of the density, thickness, and average cell size in the thickness direction of the substrate in the desired ranges.

The polyolefin foam can be crosslinked by any method. For example, the polyolefin foam may be crosslinked by irradiation with ionizing radiation such as electron rays, $\alpha$-rays, $\beta$-rays, or $\gamma$-rays. Alternatively, it can be crosslinked by preliminarily mixing organic peroxide in the polyolefin foam and decomposing the organic peroxide by heating.

The substrate has a density of 0.5 to 0.85 g/cm$^3$, a thickness of 100 to 200 $\mu$m, and an average cell size in the thickness direction of 80 $\mu$m or less.

Adjusting the density and thickness of the substrate within the above relatively high ranges and adjusting the average cell size in the thickness direction of the substrate within the above relatively low range reduce defects such as short circuit caused by static electricity when the double-sided adhesive tape is stuck to metal components. In other words, such adjustment allows the double-sided adhesive tape to have excellent voltage resistance.

Even when the substrate has a sufficiently high density, too small a thickness reduces the voltage resistance. Even when the substrate has a sufficiently large thickness, too low a density reduces the voltage resistance.

When the substrate has a density of less than 0.5 g/cm$^3$, the double-sided adhesive tape has low voltage resistance, or the substrate has low strength, lowering the impact resistance of the double-sided adhesive tape. A substrate with a density as high as more than 0.85 g/cm$^3$ cannot substantially be called as a foam. The lower limit of the density of the substrate is preferably 0.5 g/cm$^3$, and the upper limit thereof is preferably 0.65 g/cm$^3$. The lower limit is more preferably 0.55 g/cm$^3$, and the upper limit is more preferably 0.6 g/cm$^3$.

The density of the substrate can be determined in accordance with JIS K-6767 using an electronic densimeter (trade name "ED120T") available from Mirage Trading Co., Ltd.

When the thickness of the substrate is less than 100 $\mu$m, the double-sided adhesive tape has low voltage resistance, or the substrate has low strength, lowering the impact resistance of the double-sided adhesive tape. When the thickness of the substrate is more than 200 $\mu$m, the substrate has low flexibility, thus lowering the impact resistance of the double-sided adhesive tape. In addition, the double-sided adhesive tape has an increased total thickness, so that it does not suit for applications such as bonding and fixing portable electronic devices and bonding and fixing automobile components. The lower limit of the thickness of the substrate is preferably 110 $\mu$m, and the upper limit thereof is preferably 190 $\mu$m. The lower limit is more preferably 120 $\mu$m, and the upper limit is more preferably 180 $\mu$m.

When the substrate has an average cell size in the thickness direction of more than 80 $\mu$m, the double-sided adhesive tape has low voltage resistance, or the substrate has low strength, lowering the impact resistance of the double-sided adhesive tape. The upper limit of the average cell size in the thickness direction of the substrate is preferably 60 $\mu$m, more preferably 40 $\mu$m.

The lower limit of the average cell size in the thickness direction of the substrate is not limited. In order to ensure the flexibility of the double-sided adhesive tape, the lower limit is preferably 5 $\mu$m, more preferably 10 $\mu$m.

The "cell size in thickness direction" as used herein means the size of a cell (bubble) present in the polyolefin foam in the thickness direction. The average cell size in the thickness direction of the substrate can be determined by cutting the substrate in the thickness direction, observing the cross-section with a light microscope (e.g., VHX-700F, available from Keyence Corporation) at a 450-fold magnification, measuring the cell size in the thickness direction at randomly selected 30 sites, and calculating the average of the resulting values.

The substrate can be produced by any method. For example, the substrate is preferably produced by preparing a foamable resin composition containing the polyolefin resin and a blowing agent, extruding the foamable resin composition into a sheet with an extruder while expanding the blowing agent, and if necessary, crosslinking the obtained polyolefin foam.

Here, the density and average cell size in the thickness direction of the substrate can be adjusted within the desired ranges by, for example, adjusting the degree of crosslinking of the polyolefin foam or adjusting the amount of the blowing agent.

The blowing agent is not limited, and may be any blowing agent commonly used for a polyolefin foam. Examples thereof include azodicarbonamide, N,N'-dinitrosopentamethylenetetramine, and p-toluenesulfonylsemicarbazide.

The amount of the blowing agent is not limited as long as the density and average cell size in the thickness direction of the substrate can be adjusted within the desired ranges. The lower limit thereof is preferably 0.1 parts by weight, and the upper limit thereof is preferably 20 parts by weight based on 100 parts by weight of the polyolefin resin. When the amount of the blowing agent is less than 0.1 parts by weight, the substrate may have a low expansion ratio and the substrate may have too high a density or too small an average cell size in the thickness direction. When the amount of the blowing agent is more than 20 parts by weight, the substrate may have too high an expansion ratio and the substrate may have too low a density or too large an average cell size in the thickness direction. The lower limit of the amount of the blowing agent is more preferably 1 part by weight, and the upper limit thereof is more preferably 10 parts by weight based on 100 parts by weight of the polyolefin resin.

The acrylic adhesive layers on both sides of the substrate in the double-sided adhesive tape of the present invention may have the same compositions or different compositions.

The acrylic copolymer constituting the acrylic adhesive layers is preferably obtained by copolymerizing a monomer mixture containing butyl acrylate and 2-ethylhexyl acrylate.

The amount of the butyl acrylate in all the monomer mixture is preferably 40 to 80% by weight. When the amount of butyl acrylate is less than 40% by weight, the acrylic adhesive layers may be excessively soft and have low cohesion, which may cause peeling under strong impact. When the amount of butyl acrylate is more than 80% by weight, the acrylic adhesive layers may be hard and have low adhesion or tackiness, which may cause peeling under strong impact.

The amount of 2-ethylhexyl acrylate in all the monomer mixture is preferably 10 to 40% by weight. When the amount of 2-ethylhexyl acrylate is less than 10% by weight, the acrylic adhesive layers may have low adhesion, which may cause peeling under strong impact. When the amount of 2-ethylhexyl acrylate is more than 40% by weight, the acrylic adhesive layers may be excessively soft and have low cohesion, which may cause peeling under strong impact.

The monomer mixture may contain, if necessary, other copolymerizable monomer(s) in addition to butyl acrylate and 2-ethylhexyl acrylate.

Examples of such other copolymerizable monomers include functional monomers such as alkyl (meth)acrylate with a C1-C3 alkyl group (e.g., methyl (meth)acrylate, ethyl (meth)acrylate, n-propyl (meth)acrylate, isopropyl (meth)acrylate), alkyl (meth)acrylate with a C13-C18 alkyl group (e.g., tridecyl methacrylate, stearyl methacrylate), hydroxyalkyl (meth)acrylate, glycerol dimethacrylate, glycidyl (meth)acrylate, 2-methacryloyloxyethyl isocyanate, (meth)acrylic acid, itaconic acid, maleic acid anhydride, crotonic acid, maleic acid, and fumaric acid.

The copolymerization of the monomer mixture for the acrylic copolymer is performed through radical reaction of the monomer mixture in the presence of a polymerization initiator. The method of the radical reaction of the monomer mixture, that is, the method of polymerization, may be a conventionally known method, such as solution polymerization (boiling point polymerization or isothermal polymerization), emulsion polymerization, suspension polymerization, or bulk polymerization.

Any polymerization initiator may be used. Examples thereof include organic peroxides and azo compounds. Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate. Examples of the azo compound include azobisisobutyronitrile and azobiscyclohexanecarbonitrile. These polymerization initiators may be used alone or in combination of two or more thereof.

The lower limit of the weight average molecular weight (Mw) of the acrylic copolymer is preferably 400000, and the upper limit thereof is preferably 1500000. When the weight average molecular weight is less than 400000, the acrylic adhesive layers may have low cohesion, which may reduce the adhesion at the interface between each adhesive layer and the adherend. When the weight average molecular weight is more than 1500000, the acrylic adhesive layers may have a low adhesion, which may cause peeling under strong impact. The lower limit of the weight average molecular weight is more preferably 500000, and the upper limit thereof is more preferably 1200000.

The weight average molecular weight can be adjusted in the above range by adjusting the polymerization conditions such as the polymerization initiator or the polymerization temperature.

The "weight average molecular weight (Mw)" as used herein is the weight average molecular weight determined by gel permeation chromatography (GPC) in terms of standard polystyrene.

The acrylic adhesive layers each may contain a tackifying resin.

Examples of the tackifying resin include rosin ester resins, hydrogenated rosin resins, terpene resins, terpenephenol resins, coumaroneindene resins, alicyclic saturated hydrocarbon resins, C5 petroleum resins, C9 petroleum resins, and C5-C9 copolymer petroleum resins. These tackifying resins may be used alone or in combination of two or more thereof.

The amount of the tackifying resin is not limited. The lower limit thereof is preferably 10 parts by weight, and the upper limit thereof is preferably 50 parts by weight based on 100 parts by weight of the acrylic copolymer. When the amount of the tackifying resin is less than 10 parts by weight, the acrylic adhesive layers may peel from the adherends due to peel stress caused by deformation of the adherends under strong impact. When the amount of the tackifying resin is more than 50 parts by weight, the acrylic adhesive layers may be hard and have low adhesion or low tackiness, which may cause peeling under strong impact.

The main chains of the resin(s) constituting the acrylic adhesive layers (the acrylic copolymer and/or the tackifying resin) are preferably crosslinked by addition of a crosslinking agent.

Any crosslinking agent may be used. Examples thereof include isocyanate crosslinking agents, aziridine crosslinking agents, epoxy crosslinking agents, and metal chelate crosslinking agents. Preferred among these agents are isocyanate crosslinking agents. The addition of the isocyanate crosslinking agent to the acrylic adhesive layers causes a reaction of the isocyanate group of the isocyanate crosslinking agent with the alcoholic hydroxy group in the resin(s) constituting the acrylic adhesive layers, leading to loose crosslinking of the acrylic adhesive layers. This enables the acrylic adhesive layers to distribute the intermittently applied peel stress and to be more resistant to peeling from the adherends when subjected to peel stress caused by deformation of the adherends under strong impact.

The amount of the crosslinking agent to be added is preferably 0.01 to 10 parts by weight, more preferably 0.1 to 3 parts by weight based on 100 parts by weight of the acrylic copolymer.

When the degree of crosslinking of the acrylic adhesive layers is too high or too low, the acrylic adhesive layers may easily peel from the adherends due to peel stress caused by deformation of the adherends. The degree of crosslinking is preferably 5 to 40% by weight, more preferably 10 to 40% by weight, particularly preferably 15 to 35% by weight.

The degree of crosslinking of each acrylic adhesive layer can be determined by taking W1 (g) of the acrylic adhesive layer, immersing the obtained sample of the acrylic adhesive layer into ethyl acetate at 23°C for 24 hours, collecting the insoluble content by filtration with a 200-mesh wire gauze, vacuum drying the residue on the wire gauze, measuring the weight W2 (g) of the dried residue, and calculating the degree of crosslinking according to Formula (1) below.

```
Degree of crosslinking (% by weight) = 100 × W2/W1   (1)
```

The thickness of each of the acrylic adhesive layers is not limited. The thickness of each of the acrylic adhesive layers (thickness of the acrylic adhesive layer on one side) is preferably 10 to 150 $\mu$m. When the thickness of each of the acrylic adhesive layers is less than 10 $\mu$m, the double-sided adhesive tape may have low impact resistance. When the thickness of each of the acrylic adhesive layer is more than 150 $\mu$m, the double-sided adhesive tape may have reduced reworkability or reduced removability.

The double-sided adhesive tape of the present invention preferably has a total thickness of 50 to 500 $\mu$m. When the total thickness of the double-sided adhesive tape is less than 50 $\mu$m, the double-sided adhesive tape may have low impact resistance. When the total thickness of the double-sided adhesive tape is more than 500 $\mu$m, the double-sided adhesive tape may not suit for applications such as bonding and fixing components of portable electronic devices or bonding and fixing automobile components. The lower limit of the total thickness of the double-sided adhesive tape is more preferably 200 $\mu$m, and the upper limit thereof is more preferably 300 $\mu$m.

The double-sided adhesive tape of the present invention may be produced by the following method, for example.

First, an acrylic copolymer, a tackifying resin, and if necessary a crosslinking agent are mixed with a solvent to prepare a solution of an adhesive A. This solution of the adhesive A is applied to a surface of a substrate, and the solvent in the solution is completely dried and removed to form an acrylic adhesive layer A. Next, a release film is placed on the acrylic adhesive layer A such that the release-treated surface of the film faces the acrylic adhesive layer A.

Then, another release film is provided, and a solution of an adhesive B is applied to the release-treated surface of the release film. The solvent in the solution is completely dried and removed to prepare a laminated film having an acrylic adhesive layer B on the surface of the release film. The obtained laminated film is placed on the back side of the substrate with the acrylic adhesive layer A such that the acrylic adhesive layer B faces the back side of the substrate, whereby a laminate is prepared. The laminate is then pressurized with, for example, rubber rolls to prepare a double-sided adhesive tape having acrylic adhesive layers on both side of a substrate and having release films covering the surfaces of the acrylic adhesive layers.

Alternatively, the double-sided adhesive tape may be produced as follows. Two laminated films are prepared in the same manner as above, and placed on both sides of the substrate such that the acrylic adhesive layers of the laminated films face the substrate. The resulting laminate is pressurized with, for example, rubber rolls to prepare a double-sided adhesive tape having acrylic adhesive layers on both side of a substrate and having release films covering the surfaces of the acrylic adhesive layers.

The use of the double-sided adhesive tape of the present invention is not limited. The double-sided adhesive tape is preferably used for, for example, bonding and fixing a component of a portable electronic device to the device body or bonding and fixing an automobile component to the automobile body. Specifically, metal components containing metal, metal plating, or the like are preferably stuck together with the double-sided adhesive tape of the present invention.

In these applications, the double-sided adhesive tape of the present invention may have any shape, for example, a rectangular shape, a picture-frame shape, a circular shape, an oval shape, or a doughnut shape.

- Advantageous Effects of Invention

The present invention provides a double-sided adhesive tape excellent in voltage resistance and used for applications such as bonding and fixing components of portable electronic devices and bonding and fixing automobile components.

BRIEF DESCRIPTION OF DRAWINGS

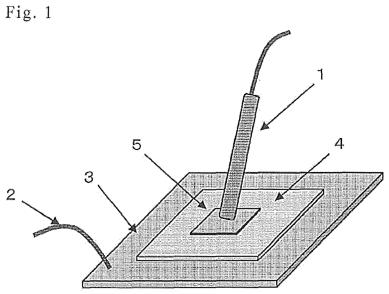

Fig. 1 is a schematic view illustrating the method of evaluating voltage resistance of the double-sided adhesive tape.

DESCRIPTION OF EMBODIMENTS

The present invention will be further described below in detail with reference to examples. The present invention, however, is not limited to these examples.

(Preparation of adhesive (1))

A reaction vessel equipped with a thermometer, a stirrer, and a condenser was charged with 70 parts by weight of butyl acrylate, 27 parts by weight of 2-ethylhexyl acrylate, 3 parts by weight of acrylic acid, 0.2 parts by weight of 2-hydroxyethyl acrylate, and 80 parts by weight of ethyl acetate. After purging with nitrogen, the reaction vessel was heated to initiate reflux. Subsequently, 0.1 parts by weight of azobisisobutyronitrile as a polymerization initiator was added to the reaction vessel. The mixture was refluxed at 70°C for 5 hours to prepare a solution of an acrylic copolymer (a). The weight average molecular weight of the obtained acrylic copolymer (a) was 710000 as measured by GPC using a column "2690 Separations Model" available from Water Corporation.

Then, 10 parts by weight of rosin ester, 10 parts by weight of terpenephenol, 125 parts by weight of ethyl acetate (available from Fuji Chemicals Ltd.), and 2.2 parts by weight of isocyanate crosslinking agent (available from Nippon Polyurethane Industry Co., Ltd., trade name "CORONATE L45") were added based on 100 parts by weight of the solids of the acrylic copolymer (a) contained in the obtained solution of the acrylic copolymer (a). The mixture was stirred to prepare an adhesive (1).

(Preparation of adhesive (2))

A solution of an acrylic copolymer (b) with a weight average molecular weight of 530000 was obtained in the same manner as the acrylic copolymer (a), except that the amount of butyl acrylate added was changed to 60 parts by weight, and that the amount of 2-ethylhexyl acrylate added was changed to 37 parts by weight.

The adhesive (2) was obtained in the same manner as the adhesive (1), except that the obtained solution of the acrylic copolymer (b) was used.

(Preparation of adhesive (3))

A solution of an acrylic copolymer (c) with a weight average molecular weight of 650000 was obtained in the same manner as the acrylic copolymer (a), except that the amount of butyl acrylate added was changed to 50 parts by weight, that the amount of 2-ethylhexyl acrylate added was changed to 40 parts by weight, and that 7 parts by weight of ethyl acrylate was added.

The adhesive (3) was obtained in the same manner as the adhesive (1), except that the obtained solution of the acrylic copolymer (c) was used.

(Example 1)

Release paper with a thickness of 150 μm was provided. The adhesive (1) was applied to the release-treated surface of the release paper and dried at 100°C for five minute to prepare an acrylic adhesive layer with a thickness of 40 μm. The acrylic adhesive layer was stuck to a surface of a polyolefin foam with the density, the thickness, and the average cell size in the thickness direction shown in Table 1. Similarly, an acrylic adhesive layer prepared in the same manner as above was stuck to the other side of this polyolefin foam. This produced a double-sided adhesive tape covered with release paper with a thickness of 150 μm and having the total tape thickness shown in Table 1.

The density of the polyolefin foam was determined in accordance with JIS K-6767 using an electronic densimeter (trade name "ED120T") available from Mirage Trading Co., Ltd. The average cell size in the thickness direction of the polyolefin foam was determined by cutting the polyolefin foam in thickness direction, observing the cross-section with a light microscope (VHX-700F, available from Keyence Corporation) at a 450-fold magnification, measuring the cell size in the thickness direction of randomly selected 30 sites, and calculating the average of the resulting values.

(Examples 2 to 7, Comparative Examples 1 to 8)

A double-sided adhesive tape was obtained in the same manner in Example 1, except that the polyolefin foam was changed to one having the density, the thickness, and the average cell size in the thickness direction shown in Table 1, that the adhesive was changed to one shown in Table 1, and that the thickness of the acrylic adhesive layers was changed to change the total thickness of the tape as shown in Table 1.

<Evaluation>

The double-sided adhesive tapes obtained in the examples and the comparative examples were subjected to the following evaluation. The results are shown in Table 1.

(1) Voltage resistance evaluation (voltage measurement)

Fig. 1 is a schematic view illustrating the method of evaluating voltage resistance of the double-sided adhesive tape.

As shown in Fig. 1, a double-sided adhesive tape (30 mm long × 30 mm wide) 4 was stuck onto a stainless steel plate (SUS plate) 3 (which is) to be in contact with a negative electrode, and an aluminum plate 5 which is to be in contact with a positive electrode was stuck onto the double-sided adhesive tape 4, whereby a specimen was prepared. A negative electrode 2 was connected to the stainless steel plate (SUS plate) 3, and a positive electrode 1 was connected to the aluminum plate 5. Voltage (DC) was applied in the thickness direction of the specimen using a withstand voltage tester TOS5101 (available from Kikusui Electronics Corporation, maximum voltage: 12 KV). After it was confirmed that no energization occurred at the voltage for five seconds, the applied voltage was increased in 0.5 KV increments, and the voltage at which energization occurred was determined.

Specimens on which energization occurred at a voltage of more than 12 KV were evaluated as "○ (Good)", and those on which energization occurred at a voltage of 12 KV or less were evaluated as "× (Poor)".

[Table 1]

| | | Example | | | | | | | Comparative Example | | | | | | | |
|---|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 | 8 |
| Polyolefin foam | Thickness [μm] | 120 | 140 | 200 | 150 | 200 | 200 | 200 | 80 | 100 | 200 | 120 | 300 | 200 | 200 | 150 |
| | Density [g/cm³] | 0.56 | 0.50 | 0.50 | 0.56 | 0.50 | 0.71 | 0.83 | 0.40 | 0.33 | 0.20 | 0.40 | 0.20 | 0.33 | 0.44 | 0.50 |
| | Average cell size in thickness direction (μm) | 21.3 | 30.8 | 31.5 | 21.7 | 33.0 | 19.2 | 15.6 | 21.7 | 24.7 | 39.4 | 27.5 | 68.1 | 33.6 | 102.1 | 108.0 |
| Adhesive | | Adhesive (1) | Adhesive (1) | Adhesive (1) | Adhesive (2) | Adhesive (2) | Adhesive (3) | Adhesive (1) | Adhesive (1) | Adhesive (2) | Adhesive (3) | Adhesive (1) | Adhesive (1) | Adhesive (2) | Adhesive (2) | Adhesive (1) |
| Total tape thickness [μm] | | 200 | 200 | 300 | 250 | 300 | 300 | 300 | 150 | 200 | 300 | 200 | 400 | 300 | 300 | 250 |
| Voltage resistance | Voltage [KV] | More than 12 | More than 12 | More than 12 | More than 12 | More than 12 | More than 12 | More than 12 | 6.5 | 7.0 | 8.0 | 9.5 | 11.5 | 12.0 | 11.0 | 9.0 |
| | Evaluation | ○ | ○ | ○ | ○ | ○ | ○ | ○ | × | × | × | × | × | × | × | × |

The present invention provides a double-sided adhesive tape excellent in voltage resistance and used for applications such as bonding and fixing components of portable electronic devices and bonding and fixing automobile components.

REFERENCE SIGNS LIST

1    Positive electrode
2    Negative electrode
3    SUS plate
4    Double-sided adhesive tape
5    Aluminum plate

**Claims**

1.  A double-sided adhesive tape, comprising:

    a substrate; and
    acrylic adhesive layers on both sides of the substrate,
    the substrate comprising a polyolefin foam,
    the substrate having a density of 0.5 to 0.85 g/cm$^3$, a thickness of 100 to 200 $\mu$m, and an average cell size in a thickness direction of 80 $\mu$m or less.

2.  The double-sided adhesive tape according to claim 1, having a total thickness of 50 to 500 $\mu$m.

3.  The double-sided adhesive tape according to claim 1 or 2, which is used for bonding and fixing a component of a portable electronic device to a device body.

4.  The double-sided adhesive tape according to claim 1 or 2, which is used for bonding and fixing an automobile component to an automobile body.

Fig. 1

## INTERNATIONAL SEARCH REPORT

| International application No. |
| --- |
| PCT/JP2015/077307 |

A.  CLASSIFICATION OF SUBJECT MATTER
*C09J7/02*(2006.01)i, *C09J133/00*(2006.01)i

According to International Patent Classification (IPC) or to both national classification and IPC

B.   FIELDS SEARCHED

Minimum documentation searched (classification system followed by classification symbols)
C09J1/00-201/10

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2013-213104 A  (Sekisui Chemical Co., Ltd.),<br>17 October 2013 (17.10.2013),<br>claims; paragraphs [0011], [0013], [0015] to<br>[0016], [0036] to [0038]; examples<br>(Family: none) | 1-3<br>4 |
| X<br>A | WO 2013/141167 A1  (DIC Corp.),<br>26 September 2013 (26.09.2013),<br>comparative example 4<br>(Family: none) | 1-3<br>4 |
| X<br>Y | JP 2013-053179 A  (Sekisui Chemical Co., Ltd.),<br>21 March 2013 (21.03.2013),<br>claims; paragraphs [0014], [0018] to [0019],<br>[0036] to [0038]; examples<br>(Family: none) | 1-3<br>4 |

☒  Further documents are listed in the continuation of Box C.       ☐     See patent family annex.

| | |
| --- | --- |
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    16 October 2015 (16.10.15) | Date of mailing of the international search report<br>    08 December 2015 (08.12.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**EP 3 202 868 A1**

**INTERNATIONAL SEARCH REPORT**

| International application No. |
|---|
| PCT/JP2015/077307 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2009-084367 A  (DIC Corp.),<br>23 April 2009 (23.04.2009),<br>paragraph [0002]<br>(Family: none) | 4<br>1-3 |
| P,X<br>P,A | JP 2014-185310 A  (DIC Corp.),<br>02 October 2014 (02.10.2014),<br>claims; paragraphs [0016] to [0017], [0023],<br>[0071], [0073]; examples<br>(Family: none) | 1-3<br>4 |
| P,X<br>P,A | WO 2015/046526 A1  (Sekisui Chemical Co., Ltd.),<br>02 April 2015 (02.04.2015),<br>claims; paragraphs [0009] to [0012], [0033] to<br>[0035]; examples<br>& TW 201520248 A | 1-3<br>4 |

Form PCT/ISA/210 (continuation of second sheet) (July 2009)

**EP 3 202 868 A1**

**Patent documents cited in the description**

- JP 2009242541 A

- JP 2009258274 A